# EUROPEAN PATENT APPLICATION

(11) **EP 2 804 444 A1**
(43) Date of publication of application: **19.11.2014**
(21) Application number: 13167896.3
(22) Date of filing: 15.05.2013
(51) Int. Cl.: H05B 33/08

(54) **Power converter for light bulb assembly comprising multiple LED arrays**

(71) Applicant: Dialog Semiconductor GmbH, 73230 Kirchheim (DE)
(72) Inventor: Knoedgen, Horst, 82110 Germering (DE)
(74) Representative: MERH-IP Matias Erny Reichl Hoffmann

(57) **Abstract**

The present document relates to solid state lighting (SSL) light bulb assemblies. In particular, the present document relates to a driver circuit and/or power converter used for such light bulb assemblies. A driver circuit (300) for providing electrical power to a plurality of SSL light sources (309, 419) is described. The driver circuit (300) comprises a power converter (305, 405) configured to provide electrical output power at an output of the power converter (305, 405). Furthermore, the driver circuit (300) comprises a plurality of light source switches (401, 411, 522, 532) configured to enable and/or to disable a supply of the electrical output power to the plurality of SSL light sources (309, 419), respectively. In addition, the driver circuit (300) comprises a controller (306) configured to control the plurality of light source switches (401, 411, 522, 532) to enable the supply of the electrical output power to the plurality of SSL light sources (309, 419) in a mutually exclusive manner.

## Description

### Technical Field

The present document relates to solid state lighting (SSL) light bulb assemblies. In particular, the present document relates to a driver circuit and/or power converter used for such light bulb assemblies.

### Background

Solid State Lighting (SSL) light bulb assemblies, e.g. Light Emitting Diode (LED) based light bulb assemblies, are expected to replace GLS (General Lighting Service) or incandescent lamps. SSL devices typically comprise a driver circuit and/or power converter in order to convert electric power from a mains supply to electric power suitable for an SSL light source comprised within the SSL device (e.g. an array of LEDs). In particular, SSL devices may comprise a plurality of light sources, e.g. a plurality of LED arrays (also referred to as LED strings). This may be beneficial in order to provide SSL devices which emit colored light. Such SSL devices typically make use of a plurality of power converters for the plurality of light sources, respectively, thereby increasing the cost of the SSL device.

The present document addresses the above mentioned technical problem. In particular, the present document describes a cost efficient driver circuit and/or power converter for an SSL device comprising a plurality of light sources.

### Summary

According to an aspect, a driver circuit for providing electrical power to a plurality of solid state lighting (SSL) light sources is described. The SSL light sources of the plurality of SSL light sources may comprise e.g. arrays of light emitting diodes (LED) and/or OLEDs. The SSL light sources of the plurality of SSL light sources may be configured to emit light at the same or at different colors. Alternatively or in addition, the SSL light sources of the plurality of SSL light sources may emit light at the same or at different intensity. By way of example, the SSL light sources of the plurality of SSL light sources may emit light at the same color but at different intensities.

The driver circuit may be configured to supply electrical power taken from a mains supply to the plurality of SSL light sources. The plurality of SSL light sources may e.g. be provided with respective drive voltages and drive currents generated by the driver circuit. The drive voltages may e.g. correspond to respective on-voltages of the plurality of SSL light sources. The drive currents may be used to control the illumination level of the plurality of SSL light sources, respectively.

The driver circuit may comprise a power converter configured to provide electrical output power. The electrical output power may be provided at an output of the power converter (e.g. at a unique output of the power converter). The electrical output power may be derived from electrical energy drawn from a mains supply). In particular, the driver circuit may comprise only a single power converter for providing the electrical output power which is to be supplied to the plurality of SSL light sources. The electrical output power may be the only electrical power which is provided to the plurality of SSL light sources. In other words, the output of the power converter may be the only source of electrical power for the plurality of SSL light sources.

The power converter may comprise a switched-mode power converter comprising a power converter switch. The power converter may comprise one or more of: a flyback converter, a buck converter, a boost converter, a buck-boost converter, and a single-ended primary-inductor converter. The power converter may comprise a serial arrangement of a plurality of power converter stages, wherein each power converter stage may correspond to one of the above mentioned single-stage power converters.

The driver circuit may comprise a plurality of light source switches configured to enable and/or to disable a supply of the electrical output power to the plurality of SSL light sources, respectively. A light source switch may comprise a transistor, e.g. a metal oxide semiconductor field effect transistor (MOSFET). One or more (e.g. all) of the plurality of light source switches may be configured to couple the respective one or more SSL light sources of the plurality of SSL light sources to ground for enabling the supply of the electrical output power to the respective one or more SSL light sources. As such, the light source switches may be ground related, which may be beneficial for providing the gate voltage for opening the light source switches. Alternatively or in addition one or more of the plurality of light source switches may be configured to couple the respective one or more SSL light sources of the plurality of SSL light sources to the output of the power converter for enabling the supply of the electrical output power to the respective one or more SSL light sources.

The driver circuit may further comprise a controller (e.g. implemented as an integrated circuit) configured to control the plurality of light source switches to enable the supply of the electrical output power to the plurality of SSL light sources in a mutually exclusive manner. By doing this, a single power converter may be used to supply power to the plurality of SSL light sources (e.g. 2 or more, 3 or more, 4 or more, 5 or more SSL light sources).

In particular, the controller may be configured to turn on (i.e. to close) a first light source switch from the plurality of light source switches during a first time slot assigned to a corresponding first SSL light source from the plurality of SSL light sources. The respective others of the plurality of light source switches may be off (i.e. open) during the first time slot. Furthermore, the controller may be configured to turn on a second light source switch from the plurality of light source switches during a second time slot assigned to a corresponding second SSL light source from the plurality of SSL light sources. The respective others of the plurality of light source switches may be off during the second time slot. The first light source switch may be different from the second light source switch, the first SSL light source may be different from the second SSL light source, and the second time slot may be subsequent to the first time slot.

As such, the controller may be configured to close the plurality of light source switches in a sequential manner during different succeeding time slots. By doing this, the electrical output power may be distributed among the plurality of SSL light sources.

In particular, the controller may be configured to assign a sequence of isolated time slots (or pulse intervals) to the first light source of the plurality of SSL light sources. The isolated time slots of the sequence of isolated time slots may be repeated at a pulse frequency. The sequence of isolated time slots may be regularly spaced. The pulse frequency may be a multiple of the cycle frequency, wherein the cycle frequency is the frequency of the cycles of a varying input voltage of the power converter (the cycle frequency may e.g. be twice a mains frequency of a mains supply). The pulse frequency may be greater than a perceptual frequency of light intensity variations perceivable by a human eye. Typical values for the perceptual frequency are in the range of 400Hz. The perceptual frequency may be defined by the fact that the human eye is not able to perceive variations of the intensity of light at frequencies which are at or above the perceptual frequency (for a given intensity level). Furthermore, the pulse frequency may be greater than a perceptual frequency of audio tones perceivable by a human ear (e.g. at or above 20kHz). The power converter (e.g. the switched-mode power converter) may be operated at a commutation cycle rate of 1MHz. The pulse frequency may be smaller than the commutation cycle rate of the power converter.

The controller may be configured to control a first light source switch of the plurality of light source switches (corresponding to the first SSL light source) such that the electrical output power is supplied to the first SSL light source (only) within the sequence of isolated time slots. As such, the first SSL light source may be provided with electrical power in a pulsed manner (during the time slots of the sequence of isolated time slots). Due to the fact that the pulse frequency is sufficiently high, the pulsed operation of the first SSL light source is not visible to the human eye.

The controller may be configured to assign a plurality of sequences of isolated time slots to the plurality of SSL light sources, respectively. As such, the plurality of SSL light sources may be operated in a pulsed manner (as described above). The plurality of sequences of time slots may be non-overlapping.

The driver circuit (notably the power converter) may be configured to provide an overdrive drive current to the first light source during the sequence of isolated time slots assigned to the first light source. The overdrive drive current typically exceeds a maximum drive current which the first SSL light source is configured to withstand during a continuous operation. As a result, the first SSL light source may be operated in an overdrive mode within the sequence of isolated time slots. By doing this, it may be ensured that the first SSL light source (and the other SSL light sources) emits an amount of illumination which is close to the amount of illumination emitted when operated in a continuous mode (even when operated in a pulsed mode).

The controller may be configured to modify an on-time interval within a first time slot of the sequence of isolated time slots which is assigned to the first SSL light source. The on-time interval may be defined such that within the first time slot, the first light source switch is closed only within the on-time interval. By doing this, a dead time between the different SSL light sources may be introduced. This may be beneficial for reducing losses caused by switching of the plurality of light source switches (because the light source switches may be switched in a drive current free manner). Furthermore, the modification of the on-time interval may be used to control the illumination level of the first SSL light source.

The time slots may have a temporal length which is equal to or which exceeds a pre-determined minimum length. The pre-determined minimum length may be sufficiently long to ensure that the respective SSL light source emits light at a stable illumination level. In other words, the pre-determined minimum length may ensure convergence of the illumination of the respective SSL light source.

As indicated above, the plurality of SSL light sources may exhibit a respective plurality of on-voltages. The power converter may be configured to provide the electrical output power at different or variable or adjustable output voltages, in dependence of one or more settings of the power converter (e.g. in dependence of the commutation cycle rate of the power converter, and/or in dependence of the duty cycle of the power converter). As indicated above, the power converter may comprise a converter switch which may be controlled using a pulse-width modulated (PWM) control signals that controls the duty cycle (that is, the ratio of the length of an 'on-state' of the converter switch over the length of a complete commutation cycle comprising an on-state phase and a succeeding off-state phase) of the converter switch.

The controller may be configured to adjust the one or more settings of the power converter such that the output voltage is at least at the on-voltage of the SSL light source to which the electrical output power is supplied. In other words, the controller may be configured to adjust the one or more settings of the power converter based on characteristics of the SSL light source to which the electrical output power is supplied. The characteristics may comprise the on-voltage of the SSL light source and/or the degree of efficiency (ratio of the emitted illumination level and the consumed electrical power) of the SSL light source. The characteristics may be different for some or all of the plurality of SSL light sources. The different SSL light sources may exhibit different kinds of (non-emitting) recombination processes and/or different kinds of resistive losses. These different properties may lead to different characteristics, e.g. different on-voltages and/or different degrees of efficiency of the SSL light sources. The controller may be configured to adjust the one or more settings of the power converter such that the different characteristics of the SSL light sources are balanced, e.g. such that some or all of the plurality of SSL light sources emit the same intensity of light.

The characteristics may be pre-determined and may be provided to the controller in advance. Furthermore, the characteristics may be variable, e.g. due to aging of the plurality of SSL light sources. The changing characteristics may be determined e.g. in the context of a calibration process and may be provided to the controller. As such, the controller may be configured to adjust the one or more settings of the power converter based on changing characteristics of the SSL light source to which the electrical output power is supplied.

The driver circuit may further comprise a bypass switch arranged in parallel to the first SSL light source of the plurality of SSL light sources. The controller may be configured to close the bypass switch to bypass the first SSL light source at a time instant, when the first light source switch of the plurality of SSL light source switches corresponding to the first SSL light source is open. By doing this, an emission of light of the first SSL light source at a time instant other than the assigned time slots may be prevented. This may be beneficial for avoiding visible flicker effects.

The driver circuit may further comprise a supply voltage capacitor configured to supply a supply voltage to the controller. Furthermore, the driver circuit may comprise a supply voltage switch configured to enable and/or to disable a supply of the electrical output power to the supply voltage capacitor. The controller may be configured to control the supply voltage switch to enable the supply of the electrical output power to the supply voltage capacitor in a mutually exclusive manner with respect to the plurality of SSL light sources. In particular, the controller may be configured to assign a sequence of isolated time slots (pulse intervals) to the supply voltage capacitor, wherein the supply voltage capacitor may be recharged using the electrical output power of the joint power converter within the time slots which are assigned to the supply voltage capacitor.

The driver circuit may further comprise an output capacitor at the output of the power converter, wherein the output capacitor is arranged in parallel to each of the plurality of light sources, when the respective light source switch from the plurality of light source switches is closed. As such, a single output capacitor may be used to reduce the ripple of the drive currents to the plurality of SSL light sources. In particular, the driver circuit may not comprise any light source specific capacitors arranged in parallel to only one of the plurality of SSL light sources. This may be beneficial for reducing the cost and size of the driver circuit.

The driver circuit may further comprise a plurality of drive current measurement means configured to provide a respective plurality of indications of the drive current through the respective plurality of SSL light sources. The drive current measurement means may comprise e.g. shunt resistors. The controller may be configured to determine an on-time interval and/or a gate voltage (for operating the light sources switches in a linear mode) of the plurality of light source switches based on the plurality of indications of the drive current.

According to a further aspect, a light bulb assembly is described. The light bulb assembly comprises an electrical connection module configured to electrically connect to a mains power supply, thereby providing an input voltage waveform. Furthermore, the light bulb assembly comprises a driver circuit according to any of the aspects outlined in the present document and configured to convert the input voltage waveform into drive signals for the plurality of solid state lighting (SSL) light sources. In addition, the light bulb assembly comprises the plurality of SSL light sources configured to provide light in accordance to the respective drive signals.

According to another aspect, a method for operating a controller and/or a driver circuit as outlined in the present document is described. The method may comprise steps which correspond to the features of the controller and/or driver circuit described in the present document. In particular, the method may be directed at providing electrical power to a plurality of solid state lighting (SSL) light sources. The method may comprise providing electrical output power at an output of a power converter. Furthermore, the method may comprise enabling a supply of the electrical output power to the plurality of SSL light sources, respectively, in a mutually exclusive manner.

According to a further aspect, a software program is described. The software program may be adapted for execution on a processor and for performing the method steps outlined in the present document when carried out on the processor.

According to another aspect, a storage medium is described. The storage medium may comprise a software program adapted for execution on a processor and for performing the method steps outlined in the present document when carried out on the processor.

According to a further aspect, a computer program product is described. The computer program may comprise executable instructions for performing the method steps outlined in the present document when executed on a computer.

It should be noted that the methods and systems including its preferred embodiments as outlined in the present document may be used stand-alone or in combination with the other methods and systems disclosed in this document. In addition, the features outlined in the context of a system are also applicable to a corresponding method. Furthermore, all aspects of the methods and systems outlined in the present document may be arbitrarily combined. In particular, the features of the claims may be combined with one another in an arbitrary manner.

In the present document, the term "couple" or "coupled" refers to elements being in electrical communication with each other, whether directly connected e.g., via wires, or in some other manner.

### Short description of the Figures

The invention is explained below in an exemplary manner with reference to the accompanying drawings, wherein
Fig. 1 illustrates a block diagram of an example light bulb assembly;
Fig. 2 shows a circuit diagram of an example driver circuit for a solid state light source comprising a two-stage power converter;
Fig. 3a illustrates an example switching sequence for supplying power to a plurality of light sources and to an IC power supply;
Fig. 3b illustrates an example drive current to one of a plurality of light sources;
Figs. 4a and 4b show block diagrams of excerpts of example driver circuits for an SSL device comprising a plurality of light sources;
Figs. 5a and 5b show block diagrams of excerpts of further example driver circuits for an SSL device comprising a plurality of light sources;
Fig. 6 illustrates an example sequence of time slots for driving a light source of the plurality of light sources; and
Fig. 7 shows a flow chart of an example method for supplying power to a plurality of light sources.

### Detailed Description

In the present document, a light bulb "assembly" includes all of the components required to replace a traditional incandescent filament-based light bulb, notably a light bulb for connection to the standard electricity supply. In British English (and in the present document), this electricity supply is referred to as "mains" electricity, whilst in US English, this supply is typically referred to as power line. Other terms include AC power, line power, domestic power and grid power. It is to be understood that these terms are readily interchangeable, and carry the same meaning.

Typically, in Europe electricity is supplied at 230-240 VAC, at 50Hz (mains frequency) and in North America at 110-120 VAC at 60Hz (mains frequency). The principles set out in the present document apply to any suitable electricity supply, including the mains/power line mentioned, and a DC power supply, and a rectified AC power supply.

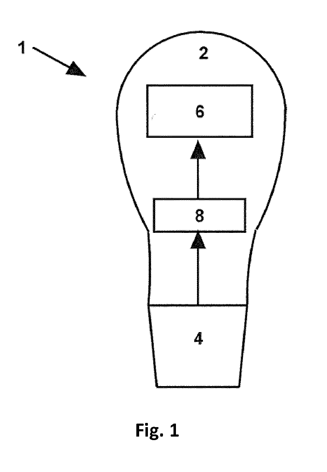

Fig. 1 is a schematic view of a light bulb assembly. The assembly 1 comprises a bulb housing 2 and an electrical connection module 4. The electrical connection module 4 can be of a screw type or of a bayonet type, or of any other suitable connection to a light bulb socket. Typical examples for an electrical connection module 4 are the E11, E14 and E27 screw types of Europe and the E12, E17 and E26 screw types of North America. Furthermore, a light source 6 (also referred to as an illuminant) is provided within the housing 2. Examples for such light sources 6 are a CFL tube or a solid state light source 6, such as a light emitting diode (LED) or an organic light emitting diode (OLED) (the latter technology is referred to as solid state lighting, SSL). The light source 6 may be provided by a single light emitting device, or by a plurality of LEDs.

Driver circuit 8 is located within the bulb housing 2, and serves to convert supply electricity received through the electrical connection module 4 into a controlled drive current for the light source 6. In the case of a solid state light source 6, the driver circuit 8 is configured to provide a controlled direct drive current to the light source 6.

The housing 2 provides a suitably robust enclosure for the light source and drive components, and includes optical elements that may be required for providing the desired output light from the assembly. The housing 2 may also provide a heat-sink capability, since management of the temperature of the light source may be important in maximising light output and light source life. Accordingly, the housing is typically designed to enable heat generated by the light source to be conducted away from the light source, and out of the assembly as a whole.

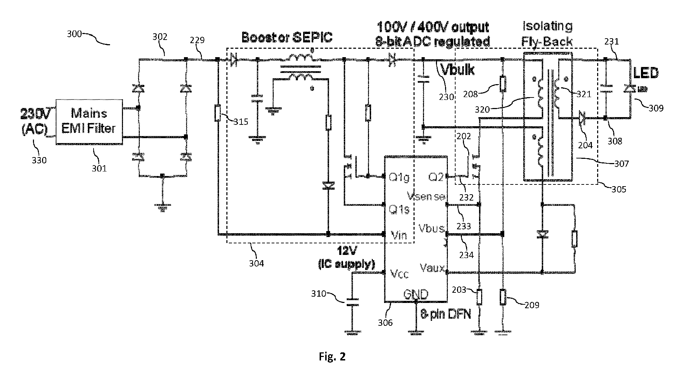

Fig. 2 shows a circuit diagram of an example driver circuit 300, 8 of a light bulb assembly 1. The driver circuit 300 may be used to provide electrical power to a load 309 (which may e.g. be a light emitting diode, LED, or an LED array). The driver circuit 300 comprises an electromagnetic interference (EMI) filter unit 301 and a rectifier 302, in order to generate a rectified input voltage 229 from the main supply 330. Furthermore, the driver circuit 300 comprises a controller 306 which is configured to control a power converter of the driver circuit 300. The controller 306 may be started using a start-up resistor 315. Furthermore, the controller may be coupled to a supply voltage capacitor 310 configured to provide the supply voltage Vcc to the controller 306 (which may be implemented e.g. as an integrated circuit, IC). In the illustrated example, the driver circuit 300 comprises a two-stage power converter with the first stage being a Boost converter 304 and the second stage being a flyback converter 305. The flyback converter 305 comprises a transformer 307 having a primary coil 320 and a secondary coil 321, and having an additional auxiliary coil for measurement purposes. The auxiliary coil may be used to provide information to the controller 306 regarding the output voltage 231 (also referred to as the drive voltage) of the driver circuit 300. Furthermore, the driver circuit 300 comprises an output capacitor (or storage capacitor) 308 which stores the electrical power to be provided to the light source 309. The flyback converter 305 comprises a diode 204 which is configured to prevent a reverse energy flow from the output of the flyback converter 305 to the input of the flyback converter 305 during an off-state of the switch 202.

The first stage of the two-stage power converter is configured to convert the rectified input voltage 229 into a bulk voltage Vbulk 230. The bulk voltage 230 corresponds to the input voltage of the second converter stage 305. The bulk voltage 230 may be sensed using input voltage sensing means 208, 209, thereby providing the sensed voltage signal 234 to the controller 306. In the illustrated example, the input voltage sensing means 208, 209 are implemented using a voltage divider comprising the resistors 208, 209. Furthermore, a sensed current signal 233 is determined using current sensing means 203, and is provided to the controller 306. The sensed current signal 233 is indicative of the current through the power switch 202 of the flyback converter 305. In the illustrated example, the current sensing means are implemented using a shunt resistor 203 which is arranged in series with the power switch 202.

The controller 306 may be configured to determine a gate control signal 232 for putting the switch 202 of the second converter stage 305 into an off-state once the current Is through the switch 202 reaches a pre-determined peak current Ip. For this purpose, the controller 306 may make use of the sensed current signal 233 and/or of the sensed voltage signal 234, thereby ensuring that variations of the bulk voltage 230 can be compensated and corresponding variations of the output voltage 231 may be reduced or avoided, thereby reducing or preventing a flickering effect of the load (e.g. light source) 309.

As indicated above, light bulb assemblies 1 may comprise a plurality of light sources 309, e.g. a plurality of LED arrays emitting differently colored light. A possible solution to providing electrical power to the plurality of light sources 309 could be to provide a plurality of corresponding driver circuits 300, 8 and/or power converters 305 for each of the plurality of light sources 309, respectively. This, however, would significantly increase the cost of the light bulb assembly 1.

In the present document, a concept is described which allows the use of only a single power converter 305 (e.g. a buck converter) for a plurality of different light sources 309 (e.g. for a set of 4 LED strings). It should be noted that the single power converter 305 may comprise a plurality of serial converter stages (as illustrated in Fig. 2). On the other hand, the driver circuit 300 may be configured to provide electrical power only at a single output port, and the electrical power at the single output port may be distributed (sequentially) to the plurality of light sources 309.

The different light sources 309 may be operated with different drive voltages 231. For this purpose, the single (joint) power converter 305 may be configured to provide different drive voltages 231 at the output of the power converter 305 at different time instants (or within different time slots). As such, the power converter 305 may be configured to provide the different drive voltages 231 for the different light sources 309 sequentially at different time instants (or during different time slots). Hence, it is proposed in the present document to make use of time multiplexing for the provision of electrical power to a plurality of different light sources 309.

The driver circuit 300 described in the present document makes use of a plurality of switches for the plurality of light sources 309, wherein the plurality of switches is configured to control the provision of electrical power to the respective one of the plurality of light sources 309. In particular, the plurality of switches may be closed (in a mutually exclusive manner) within different time slots, to provide electrical power to the different light sources 309 within the different time slots. The plurality of switches for the plurality of light sources 309 may be used in such a way, that no reverse protection circuit is required. Overall, the use of time multiplexing may be used to reduce the cost and size of the light bulb assembly, while providing unaltered performance. Furthermore, a dimming functionality of the light bulb assembly 1 may be provided in an efficient manner. Furthermore, the losses of the driver circuit may be kept low, notably because of not using analog current sources and or resistors.

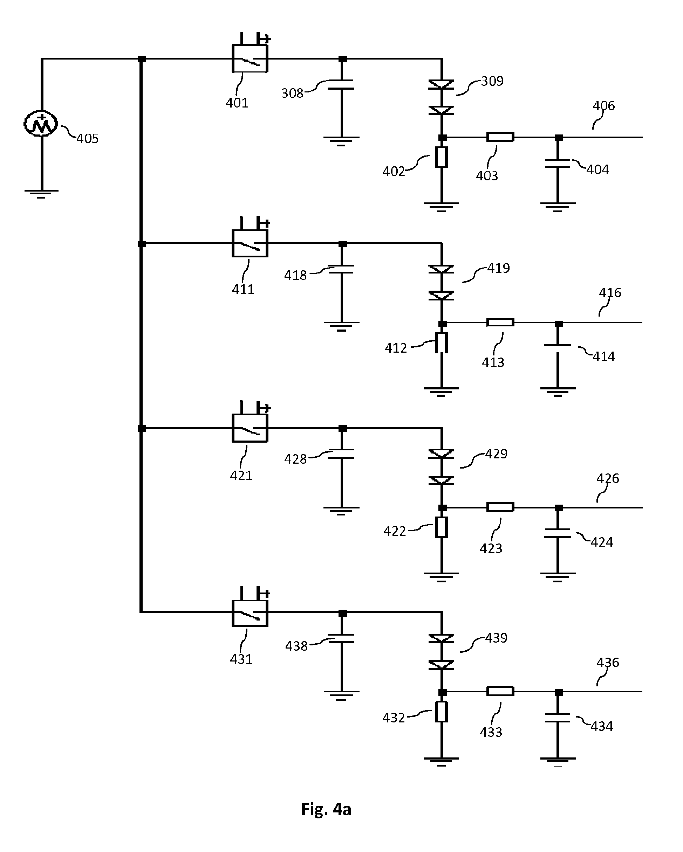

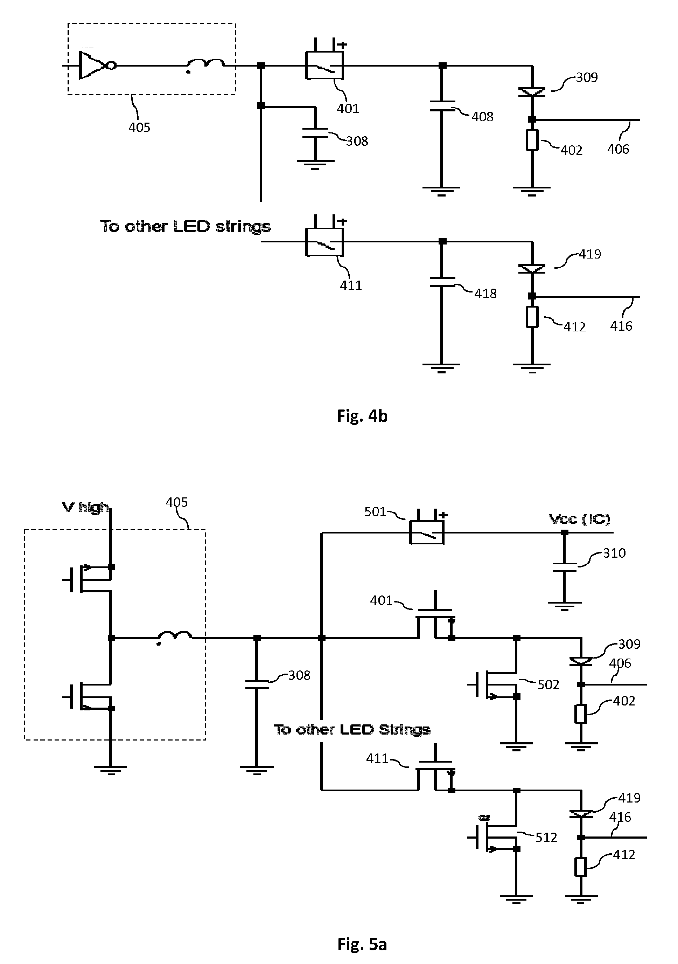

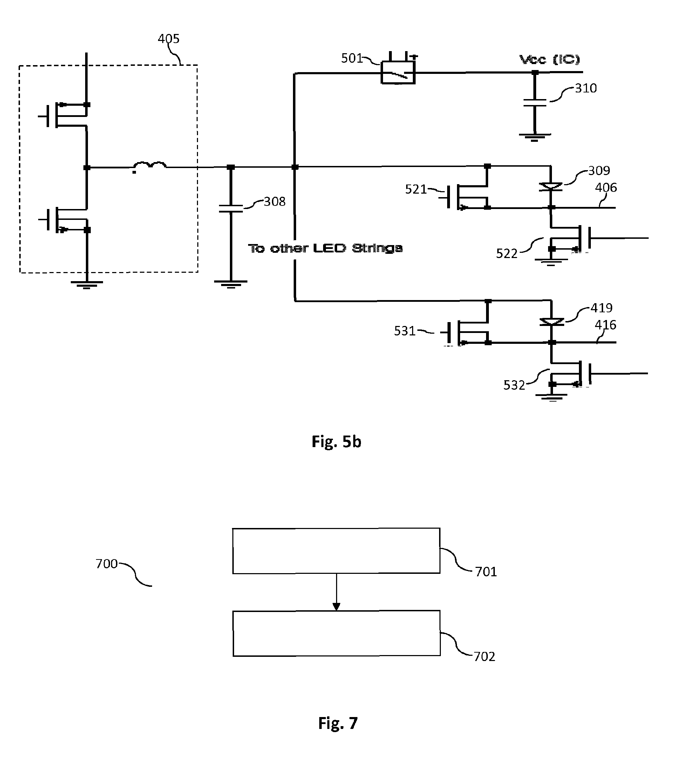

Fig. 4a shows a block diagram of an (excerpt of an) example driver circuit comprising a single power converter 405 (e.g. a buck converter) for a plurality of light sources 309, 419, 429, 439. The power converter 405 may correspond to the power converter 305 of the driver circuit 300 of Fig. 2. In other words, a driver circuit for a plurality of light sources 309, 419, 429, 439 may comprise the same components as the driver circuit 300 of Fig. 2, wherein the power converter 305 is replaced by the power converter 405 and wherein the output capacitor 308 and the light source 309 are replaced by the other components illustrated in Fig. 4a (and/or in Figs. 4b, 5a or 5b).

The driver circuit may comprise a plurality of light source switches 401, 411, 421, 431 (e.g. a plurality of transistors such as metal oxide semiconductor field effect transistors). A light source switch 401, 411, 421, 431 is configured to couple (when closed) and/or decouple (when open) the respective light source 309, 419, 429, 439 to and/or from the single power converter 405, i.e. to the single output of the power converter 405. As such, the supply of power to the respective light source may be provided and/or interrupted. Furthermore, the driver circuit may comprise a plurality of output capacitors 308, 418, 428, 438 for the plurality of light sources 309, 419, 429, 439. An output capacitor 308, 418, 428, 438 may be used to smoothen the drive voltage and/or the electrical power provided to the respective light source 309, 419, 429, 439.

In addition, the driver circuit may comprise drive current feedback means 402, 403, 404 configured to provide an indication of the drive current 406 provided to a light source 309. The indication of the drive current 406 may be provided to an analog-to-digital converter (ADC) for further processing. In particular, the indication of the drive current 406 may be provided to the controller 306 of the driver circuit 300. The driver circuit may comprise a plurality of drive current measurement means 402, 403, 404, 412, 413, 414, 422, 423, 424, 432, 433, 434 configured to provide a plurality of indications of the drive currents 406, 416, 426, 436 through the plurality of light sources 309, 416, 426, 436, respectively.

The controller 306 may be configured to control the plurality of light source switches 401, 411, 421, 431 in order to control the supply of electrical power to the respective plurality of light sources 309, 419, 429, 439. For this purpose, the controller 306 may take into account the plurality of indications of the drive currents 406, 416, 426, 436.

The power converter 405 may be operated as a current source. The total electrical power provided by the power converter 405 may be limited (e.g. to a total of 20 Watt). The controller 306 may be configured to slit up the total power provided by the power converter 405 to the individual power provided to each of the plurality of different light sources (e.g. to the plurality of different LED strings) 309, 419, 429, 439. The total power may be slit up using the plurality of light source switches 401, 411, 421, 431. By closing a light source switch 401, power is provided to the respective light source 309, and by opening the light source switch 401, the supply of power to the respective light source 309 is interrupted.

In particular, the plurality of light source switches 401, 411, 421, 431 may be operated in a mutually exclusive manner, such that at any time instant at most only a single one of the plurality of light source switches 401, 411, 421, 431 is closed, while the others of the plurality of light source switches 401, 411, 421, 431 are open. This means that at any time instant electrical power is provided at most only to a single one of the plurality of light sources 309, 419, 429, 439. As such, the plurality of light source switches 401, 411, 421, 431 may be operated in a time multiplexed manner, thereby assigning different time slots to the different light sources 309, 419, 429, 439.

The time multiplexing scheme (e.g. the length of the time slots assigned to each light source 309, 419, 429, 439) may be used to control the characteristics of the light emitted by the light bulb assembly 1. By way of example, the light bulb assembly 1 may comprise 4 LED arrays 309, 419, 429, 439 (for the colors Red, Green, Blue and for white). The sequence of the light source switches 401, 411, 421, 431 may be scrambled as required for the light to be emitted by the light bulb assembly 1. If only the white LED 309 is used, then the complete power of the power converter 405 will be provided to the LED array 309, otherwise the total power will be spit up to the different LED arrays 309, 419, 429, 439 in accordance to the time slots assigned to the respective LED arrays 309, 419, 429, 439.

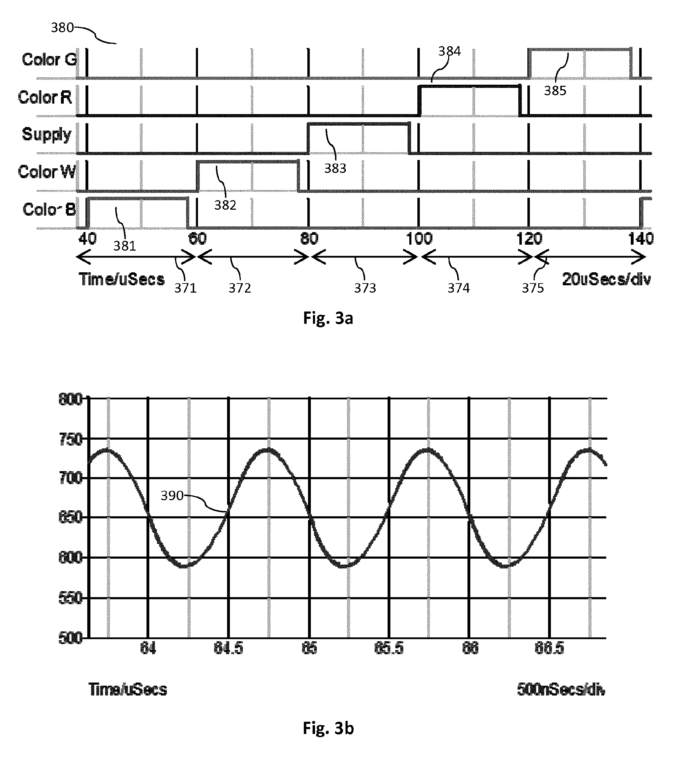

As indicated above, the output capacitors 308 parallel to respective light sources 309 may be used to reduce the ripple of the current and/or voltage provided to the respective light source 309. Alternatively or in addition, a joint output capacitor 308 may be used for the different light sources 309, 419 (as illustrated in Fig. 4b). By doing this, the size of the light source specific output capacitors 408, 418 may be reduced (as shown in Fig. 4b). By way of example, the power converter switching frequency may be in the range of 1 MHz, and the power converter 405 may comprise an inductor of 22 µH. The joint output capacitor 308 may have a capacitance of 50 nF, thereby yielding for a light source current 390 at 700 mA a ripple of about 10 % (as illustrated in Fig. 3b). The joint output capacitor capacitor 308 may buffer the output power of the inductor of the power converter 405 (as illustrated in Fig. 4b). The light source specific output capacitors 408, 418 may have a capacitance of several nF, and may be used for additional spike filtering. The light source specific output capacitors 408, 418 may be optional. As such, the light sources 309, 419 may not be provided with significant storage elements. As a result, the cost and the size of the light bulb assembly 1 may be reduced.

It should be noted that SSL based light sources 309 (e.g. LEDs) typically have a high resistance for drive voltages 231 which are below their active mode voltage (i.e. below their on-voltage). As such, the voltage across the light sources 309 may be modulated from zero to the light sources active mode with low losses. This is beneficial for the switching between the plurality of different light sources 309, 419. In particular, this allows for keeping the losses which are caused by the switching between the different light sources 309, 419 relatively low.

As indicated above, the capacitor 408, 418 parallel to the LED's 309, 319 may not be required. Furthermore, the drive current measurement means 402, 412 (for measuring the current through the respective light sources 309, 419) may be optional. As indicated above, the indications of the drive current 406, 416 may be beneficial for controlling the light source switches 401, 411, and for controlling the intensity of the light emitted by the respective light sources 309, 419. Alternatively or in addition, the drive current through the light sources 309, 419 may be controlled based on the output current provided by the power converter 405 (which may be measured e.g. via current measurement means 2303 as illustrated in Fig. 2). The output current provided by the power converter 405 may also be used to control the switching times of the plurality of light source switches 401,411.

As indicated above, the power converter 405 may be a buck converter, with an input voltage 230 of e.g. 50 V and an operation frequency of e.g. 1 MHz. The buck converter 405 may act as a controlled current source for the plurality of different light sources 309, 419. The input voltage 230 may be adjusted depending on the output voltage 231 to be provided by the power converter 405. This output voltage 231 may correspond to an average of the on-voltages of the plurality of different light sources 309, 419. The power converter (e.g. the buck converter) 405 may operate in continuous conduction mode or in boundary conduction mode, in order to reduce the current ripple of the drive current.

The time interval for LED power splitting may be about 40 µs, so that each light source 309, 419 is be well settled and so that the overall switching time is negligible compared to the supply time. In other words, the length of the time slots assigned to a particular light source 309 may be sufficiently long in order to allow for a stable emission of light from the particular light source 309. Furthermore, the length of the time slot may be selected to be sufficiently long such that a ratio of the switching time interval (for switching from one light source to another light source) and the length of the time slots is at or below a pre-determined threshold (e.g. 10% or 5% or less). This may be beneficial for keeping losses caused by switching low.

The power converter 405 may be configured to supply the plurality of different light sources 309, 419 during different time slots (within a sequence of time slots). The time slots for the different light sources 309, 419 may be mutually exclusive, such that a maximum of one light source 309, 419 is supplied with power during each time slot.

The indications of the drive currents 406, 416 may be provided to ADCs (e.g. within the controller 306). The indications 406, 416 are indicative of the actual individual light source's current over time and may be used to calculate the brightness of the light emitted by the respective light sources 309, 419. By modifying the on-times (in a similar manner to Pulse Width Modulation) of the different light sources 309, 419, the lumen output of the different light sources 309, 419 can be adjusted. Alternatively or in addition, the lumen output of the different light sources 309, 419 can be adjusted by the light source specific drive current provided to the different light sources 309, 419 by the power converter 405. The light source specific drive currents may be provided by adjusting the settings of the power converter 405 in dependence of the light source 309, 419 which is to be supplied with power. In other words, the settings of the power converter 405 may be adjusted on a time slot per time slot basis to the plurality of different light sources 309, 419.

In particular, the drive voltage 231 which is provided by the joint power converter 405 may be adjusted to the on-voltage of the light source 309, 419 which is to be supplied with power. Furthermore, the drive current which is provided by the joint power converter 405 may be adjusted to the current to be supplied to the currently active light source 309, 419. The drive voltage 231 and/or the drive current may be adjusted by adjusting the settings (e.g. the commutation cycle and/or the duty cycle) of the power converter 405.

As indicated above, the power converter (e.g. the buck converter) 405 may be acting as (or close to) a constant current source within each time slot. Consequently, the light sources 309, 419 typically do not require significant buffer capacitors 408, 418.

Fig. 3a shows an example time slot diagram 380 which illustrates the "open" and "closed" states of the plurality of light source switches 401, 411. In the illustrated example, the plurality of light sources comprises light sources for the different colors Red, Green, Blue and White. The time slot 371 is assigned to the light source 439 which emits light of the color Blue, the time slot 372 is assigned to the light source 309 which emits light of the color White, the time slot 374 is assigned to the light source 419 which emits light of the color Red and the time slot 375 is assigned to the light source 429 which emits light of the color Green.

Furthermore, it can be seen that the respective light source switches 401, 411, 421, 431 may have on-time intervals 381, 382, 384, 385 which are shorter than the length of the respective time slots 371, 372, 374, 375. It can be seen that during the on-time interval 381 the light source which emits light of the color Blue is on, while the other light sources are off. In the on-time interval 382 the light source which emits light of the color White is on, while the other light sources are off. In the on-time interval 384 the light source which emits light of the color Red is on, while the other light sources are off. In the on-time interval 385 the light source which emits light of the color Green is on, while the other light sources are off.

In between successive on-time intervals 381, 382 a dead time may be inserted, where none of the light sources is on and/or where all of the plurality of light source switches 401, 411 are off. In other words, between the individual light source on-(supply) times 381, 382, a gap (dead time) may be inserted. The dead times may be beneficial to allow for a lossless switching between the different light sources 309, 419. The light source on-times 381, 382 may be modulated to increase or reduce the dead time. In other words, the time slots 371, 372 which are assigned to the different light sources 309, 419 may be kept constant, however, the on-time intervals 381, 382 within the fixed time slots 371, 372 may be increased and/or decreased, thereby decreasing and/or increasing the dead time. Such modulation of the on-time interval 381 of a first light source does not affect the on-time interval 382 of the other light sources. Hence, such modulation of the on-time intervals 381, 382 allows the drive current to the first light source (and by consequence the amount of emitted light) to be modified, without impacting the other light sources.

The time slot diagram 380 also indicates a time slot 373 which may be assigned to supplying the supply voltage for the driver circuit 300 (e.g. to recharging the supply voltage capacitor 310). In a similar manner, an on-time interval 383 may be modified, in order to modify the amount of electrical power provided to the supply voltage.

Fig. 5a shows a block diagram of an excerpt of a driver circuit comprising a supply voltage switch 501 which is configured to couple the supply voltage capacitor 310 to the output of the power converter 405 in order to recharge the supply voltage capacitor 310. As such, the supply voltage can be provided (i.e. the supply voltage capacitor 310 can be recharged) in an energy efficient manner, using the joint power converter 405.

Fig. 5a also illustrates the use of grounding switches 502, 512 (e.g. transistors such as MOSFETs) configured to ground a corresponding light source 309, 419 at time instants when the light source 309, 419 is not used. As such, the plurality of grounding switches 502, 512 may be switched in sync with the respective plurality of light source switches 401, 411. The grounding of the light sources 309, 419 may be used to prevent light emission from the light sources 309, 419 due to switching transistor leakage currents (i.e. due to leakage currents of the respective light source switches 401, 411). Alternatively or in addition, light emission of the light source 309 at time instants which do not fall into the assigned time slots 381 may be prevented by using resistors with relatively high resistance values in parallel to the light source 309.

In Fig. 5a, the power converter (e.g. buck converter) 405 comprises a half bridge comprising a high side switch and a low side switch. As long as the power converter 405 is deactivated, its half bridge is in a steady state (e.g. at High voltage, at Low voltage or floating). If e.g. the first light source switch 401 is switched on and the power converter 405 starts to operate, a current will flow in the selected first light source 309 only. The other light sources 419 are not selected during this time.

The benefit of the above mentioned concept is that two transistors in series are not required, because the voltage at the LED will go to zero. On the other hand, the concept may require the use of an isolated HV transistor (TSMC like). It should be noted that only switches for the supply of the power (i.e. the light source switches 401, 411) may require a reverse protection, because the voltage is buffered by a relatively large capacitor 308. As such, the current is typically low.

Typically, transistors comprise a body diode in parallel to drain source. The transistors only operate correctly, if the body diode is not activated. Otherwise, the body diode may block operation. Due to this, the source of a transistor should face the relatively lower voltage compared to the drain of the transistor (facing the relatively higher voltage). In an inverse case, the body diode of the transistor may be activated and a current may flow.

Fig. 5b shows a further example excerpt of a driver circuit, where the light source switches 522, 532 are ground related. This means that the light source switches 522, 532 are configured to couple the respective light sources 309, 419 to ground.

The arrangement of Fig. 5b may be beneficial compared to light sources switches 401, 411 which are configured to couple the respective light sources 309, 419 to the output of the power converter 405, because a gate voltage which is greater than the gate-source voltage (for closing the light source switches) may be provided more easily. Furthermore, the driver circuit of Fig. 5b may be beneficial, as it is not affected by an unintentional activation of body diodes of the transistors 521,531.

Furthermore, the driver circuit of Fig. 5b comprises switches 521, 531 (or resistors) arranged in parallel to the respective light sources 309, 419. The switches 521, 531 may be transistors e.g. MOSFETs. The switches 521, 531 may be used to avoid capacitive currents through the light sources 309, 419 at time instants, when the light sources 309, 419 are switched off.

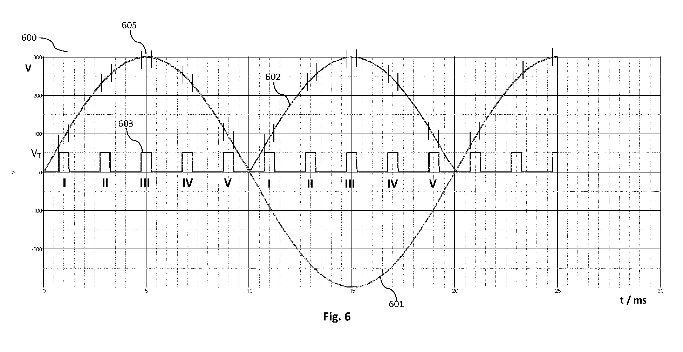

As outlined above, each light source 309 of the plurality of light sources 309, 419 is provided with electrical power within mutually exclusive time slots 371. As such, a light source 309 is provided with pulses of electrical power within the time slots 371 assigned to the respective light source 309. Fig. 6 illustrates a voltage / time diagram 600 which illustrates a stream of pulses of electrical power provided to the light source 309. The other light sources of the plurality of light sources 309, 419 are provided with a similar stream of pulses, wherein the streams of pulses for the different light sources 309, 419 are offset with respect to one another.

In particular, Fig. 6 shows a voltage / time diagram 600 of a cycle of the mains voltage. It can be seen that the AC mains voltage 601, 330 oscillates in a sinusoidal manner at the cycle rate of 50Hz. Furthermore, the diagram 600 shows the rectified voltage 602, 229 at the output of the rectifier 302. For illustrative purposes, it is assumed that the first light source 309 of the plurality of light sources 309, 419 requires an on-voltage Vₒₙ of 150V. Thus, the drive voltage provided by the power converter 495 should be at or above the on-voltage Vₒₙ of 150V within the first time slots 371 assigned to the first light source 309, in order to ensure that the first light source 309 emits light. Furthermore, the voltage drop across the corresponding first light source switch 401 should be taken into account. Typically, the output voltage provided by the power converter 405 (i.e. the drive voltage) within the first time slot 371 is the sum of the on-voltage Vₒₙ of the first light source 309 and the voltage drop across the first light source switch 401 (if the output voltage is greater than the on-voltage Vₒₙ of the first light source 309). Furthermore, for ease of the following explanation, but without being limited to the example values, it is assumed that the power converter 405 is a combined step-up / step-down converter (e.g. a buck / boost converter) providing a maximum step-up voltage ratio (i.e. the output voltage of the power converter 405 may be higher than the input voltage of the power converter 405 by up to the maximum step-up voltage ratio) and a maximum step-down voltage ratio (i.e. the output voltage of the power converter 405 may be lower than the input voltage by up to the maximum step-down voltage ratio).

As outlined above, it is suggested in the present document to drive each light source of a plurality of light sources 309, 419 in a pulsed mode, thereby allowing the plurality of light sources 309, 419 to be provided with electrical power using a joint power converter 405. Each light source may be operated in the pulsed mode at a frequency at or above the cut-off frequency for intensity variations of the human eye (e.g. at or above 400Hz). This is illustrated in Fig. 6 which shows a sequence of pulse intervals 603 during which the power converter 405 provides electrical power to the first light source 309 of the plurality of light sources 309, 419. The illustrated pulse intervals 603 have a frequency of e.g. 500Hz (i.e. a frequency above the cut-off frequency for intensity variations of the human eye). Preferably, the pulse frequency is a multiple of the cycle frequency (of the mains supply). Furthermore, the pulse intervals 603 may be synchronized with the mains cycle, such that for each pulse interval 603 the rectified voltage 602 is at or above a pre-determined voltage threshold V_{T} (e.g. V_{T}=50V in the illustrated example). The pre-determined voltage threshold V_{T} typically depends on the power converter 405 (notably on the maximum step-up voltage ratio and possibly the maximum step-down voltage ratio of the power converter 405). The pre-determined voltage threshold V_{T} may be selected such that the power converter 405 is able to generate at least the on-voltage Vₒₙ of the first light source 309 from the rectified voltage 602 during each of the pulse intervals 603 (plus a possible minimum voltage drop V_{src,min} across the first light source switch 401 arranged in series to the first light source 309). In other words, the pulse intervals 603 should be placed such that the rectified voltage 602 is at or above the pre-determined voltage threshold V_{T} within the pulse intervals 603, wherein the pre-determined voltage threshold V_{T} corresponds to the on-voltage Vₒₙ of the first light source 309 (plus a possible minimum voltage drop V_{src,min} across the first light source switch 401 arranged in series to the first light source 309) divided by the maximum step-up voltage ratio of the power converter 405.

As such, the pulse intervals 603 define time intervals during which the power converter 405 converts the rectified voltage 602 into a drive voltage and a drive current for the first light source 309.

Fig. 6 also illustrates the voltage values 605 of the rectified voltage 602 corresponding to the pulse intervals 603, which are shown as "intervals" above the pulse intervals 603. The voltage values 605 of the rectifier voltage 602 within the pulse intervals 603 form voltage pulses 605 of the rectified voltage 602. For voltage pulses 605 of the rectified voltage 602 which comprise voltage values below the on-voltage Vₒₙ of the first light source 309 (here Vₒₙ=150V for example), the power converter 405 typically performs a step-up conversion, whereas for voltage pulses 605 of the rectified voltage 602 which comprise voltage values above the on-voltage Vₒₙ of the first light source 309, the power converter 405 typically performs a step-down conversion.

Hence, the controller 306 may be configured to control the conversion ratios of the power converter 405 for the different pulse intervals 603. In particular, the driver circuit 300 may make use of different conversion ratios of the power converter 4050 for each pulse interval 603 within a rectified half-wave cycle of the mains voltage 601. Furthermore, the conversion ratios of the power converter may vary within each of the pulse intervals 603. The controller 306 may be configured to control the power converter 405 accordingly.

It should be noted that the power converter 405 is typically configured to provide a drive voltage to the first light source 309 which is arranged in series to the first light source switch 401. The first light source switch 401 may be used to regulate the drive current to the first light source 309. In a similar manner, the plurality of light source switches 401, 411 may be configured to regulate the respective drive currents to the respective plurality of light sources 309, 419, e.g. by operating the light source switches 401, 411 in their respective linear modes. The plurality of light sources switches 401, 411 may be controlled by the controller 306.

By way of example, the drive voltage Vₒᵤₜ may be Vₒᵤₜ=Vₒₙ+V_{src}, wherein V_{src} is the voltage drop across the first light source switch 401. As such, the drive voltage Vₒᵤₜ provided by the power converter 405 should typically exceed the on-voltage Vₒₙ of the light source 309 plus a minimum voltage drop V_{src,min} required by the first light source switch 401. In the above mentioned example, it was assumed that the minimum voltage drop V_{src,src} is zero. In case of a minimum voltage drop V_{src,min} greater zero (e.g. V_{src,min}=10V), the voltage threshold V_{T} should correspond to the on-voltage Vₒₙ of the first light source 309 plus the minimum voltage drop V_{src,min} across the first light source switch 401, divided by the maximum step-up voltage ratio of the power converter 405 (as already indicated above).

As a result of the pulsed operation of first light source 309 (and of the others of the plurality of light sources 309, 419), the first light source 309 is turned on (and off) at the frequency of the pulses 605, i.e. at the pulse frequency fₚ. During every pulse, the first light source 309 emits light at the same energy / intensity.

However, due to the fact that the pulse frequency is at or above the cut-off frequency for intensity variations of the human eye, the human eye does not perceive the intensity variations and instead perceives constant light at an average intensity, wherein the average intensity depends on the intensity of the light emitted by the first light source 309 during a pulse interval 603, the length of the pulse interval 603 and the time interval between two pulse intervals 603. The length of the pulse interval 603 typically corresponds to the on-time interval 381 of the first light source 309. By way of example, the average intensity may be given as the average of the intensity of the light emitted by the first light source 309 during a complete pulse cycle (comprising the pulse interval 603 and the time interval between two succeeding pulse intervals 603). If Lₚ is the intensity of the light emitted by the first light source 309 during the pulse interval 603, if Tₚ is the length of the pulse interval 603, then the average intensity Lₐ may be Lₐ=Lₚ*Tₚ*fₚ (wherein "*" is the multiply operator). The term Tₚ*fₚ describes the on-rate of the lighted emitted by the first light source 309.

As outlined above, the average intensity Lₐ is typically reduced (compared to the full intensity Lₚ) due to the intermittent or pulsed operation of the first light source 309. In the above example, the average intensity is reduced by Tₚ*fₚ (which is a factor 1/4 in the example shown in Fig. 6). This may be disadvantageous in view of the average light intensity which is produced by the first light source 309. It should be noted, however, that the first light source 309 (e.g. an SSL light source) can typically be operated in a so called overdrive mode for short periods of time. This means that for short periods of time, the first light source 309 may be operated with an increased drive current, thereby emitting an increased intensity. The overdrive mode can typically not be applied for an extended period of time, due to an increased thermal energy created within the first light source 309 causing thermal damage. However, when operated in the pulsed mode, as outlined above, the first light source 309 may be operated in the overdrive mode, thereby emitting an increased intensity of light. The increased thermal energy may be dissipated during the time periods in between the pulse intervals 603, thereby enabling the operation of the first light source 309 (and of the others of the plurality of light source 309, 419) in an overdrive mode. By consequence, it is possible to operate the first light source 309 during the pulse intervals 603 in an overdrive mode in which the first light source 309 emits an increased overdrive intensity Lₒ. The overdrive intensity Lₒ may be 1/ Tₚ*fₚ higher than the full intensity Lₚ of the first light source 309, thereby compensating for the pulsed operation of the first light source 309 and generating the same average light intensity as in case of a continuous operation of the first light source 309 at full intensity Lₚ (using a dedicated power converter). By way of example, a high voltage LED array can handle an overdrive drive current which exceeds the current for providing full intensity Lₚ by a factor of three.

Fig. 7 describes an example method 700 for providing electrical power to a plurality of solid state lighting (SSL) light sources 309, 419. The method 700 comprises providing 701 electrical output power at an output of the power converter 305, 405. Furthermore, the method 700 comprises enabling 702 a supply of the electrical output power to the plurality of SSL light sources 309, 419, respectively, in a mutually exclusive manner.

In the present document, an efficient driver circuit for providing power to a plurality of light sources has been described. The driver circuit makes use of a joint power converter for the plurality of light sources. The joint (single) power converter may be used to supply power to all the light sources and to the supply voltage. The driver circuit exhibits low losses and constitutes a non linear current source for the different light source currents. Furthermore, low capacitor values may be used for the individual light sources, thereby reducing the cost and size of the driver circuit. For each light source, only a single power switch may be used. The different light sources may be turned on at a rate which is at 1 KHz or greater, thereby ensuring that the PWM of the light sources is not visible to the human eye. The time slots for the different light sources may be adjusted for adjusting the amount of light emitted by the different light sources. Even though the operation of the light sources is intermittent, the light sources (e.g. the LED arrays) may be used close to 100 %, e.g. by using the delta sigma concept for driving the light sources. The operation of the joint power converter may be adjusted to different drive voltages and/or drive currents (depending on the characteristics of the different light sources). Furthermore, the sequence 380 of time slots may be optimized for charging / discharging of the light source specific capacitors.

The driver circuit described in the present document allows for a flexible provision of electrical energy to different parallel LED strings (or arrays) using a single power converter. The intensity of the emitted light of an LED string may be controlled over time (by varying a length of the time slots) and/or current (by varying the current through the LED string). The current through the LED string may be controlled by operating the power converter as a controlled current source (e.g. by adapting the commutation cycle rate and/or the duty cycle of the power converter). The number of time slots which are assigned to an LED string may be modified (e.g. multiple time slots with the same current or different current may be assigned to a particular LED string). Alternatively or in addition, a particular LED string may be stimulated with two or more current time slots over time, with a flexible timing of the time slots (Delta Sigma concept).

The sequence of time slots and/or the current during the time slots may be selected to reduce acoustical noise. By way of example, the current within a time slot may be ramped up and/or down, in order to reduce the acoustical noise of the power converter.

As indicated above, one or more time slots may be used for charging one or more power supplies. Different output voltages may be generated by the power converter to charge different power supplies (e.g. 3 V logic and/or 12 V FET driver). This allows to further increase the efficiency of the system.

It should also be noted that the series (or sequence) of the LED time slots may be changed. By way of example, the sequence of the time slots may be assigned such that the time slots are assigned to the corresponding LED strings in accordance to increasing on-voltages of the LED strings. By doing this, the voltage at the output capacitor of the power converter may be smoothly increased. This may be beneficial in view of a reduction of losses (power converter capacitor charging / discharging losses). The adaption of the sequence may be performed on the fly or in a self learning manner.

It should be noted that the description and drawings merely illustrate the principles of the proposed methods and systems. Those skilled in the art will be able to implement various arrangements that, although not explicitly described or shown herein, embody the principles of the invention and are included within its spirit and scope. Furthermore, all examples and embodiment outlined in the present document are principally intended expressly to be only for explanatory purposes to help the reader in understanding the principles of the proposed methods and systems. Furthermore, all statements herein providing principles, aspects, and embodiments of the invention, as well as specific examples thereof, are intended to encompass equivalents thereof.

## Claims

1. A driver circuit (300) for providing electrical power to a plurality of solid state lighting, referred to as SSL, light sources (309, 419), the driver circuit (300) comprising
- a power converter (305, 405) configured to provide electrical output power;
- a plurality of light source switches (401, 411, 522, 532) configured to enable and/or to disable a supply of the electrical output power to the plurality of SSL light sources (309, 419), respectively; and
- a controller (306) configured to control the plurality of light source switches (401, 411, 522, 532) to enable the supply of the electrical output power to the plurality of SSL light sources (309, 419) in a mutually exclusive manner.

2. The driver circuit (300) of claim 1, wherein
- the plurality of SSL light sources (309, 419) exhibit a respective plurality of on-voltages;
- the power converter (305, 405) is configured to provide the electrical output power at variable output voltages (231), in dependence of one or more settings of the power converter (305, 405);
- the controller is configured to adjust the one or more settings of the power converter (305, 405) such that the output voltage (231) is at least at the on-voltage of the SSL light source (309, 419) to which the electrical output power is supplied.

3. The driver circuit (300) of any previous claim, wherein the controller (306) is configured to
- turn on a first light source switch (401) from the plurality of light source switches (401, 411, 522, 532) during a first time slot (371) assigned to a corresponding first SSL light source (309) from the plurality of SSL light source (309, 419); wherein the respective others of the plurality of light source switches (401, 411, 522, 532) are off during the first time slot (371); and
- turn on a second light source switch (411) from the plurality of light source switches (401, 411, 522, 532) during a second time slot (372) assigned to a corresponding second SSL light source (419) from the plurality of SSL light sources (309, 419); wherein the respective others of the plurality of light source switches (401, 411, 522, 532) are off during the second time slot (372); wherein the first light source switch (401) is different from the second light source switch (411); wherein the first SSL light source (309) is different from the second SSL light source (419); and wherein the second time slot (372) is subsequent to the first time slot (371).

4. The driver circuit (300) of any previous claim, wherein the controller (306) is configured to
- assign a sequence of isolated time slots (371, 603) to a first SSL light source (309) of the plurality of SSL light sources (309, 419); wherein the isolated time slots (371, 603) of the sequence of isolated time slots (371, 603) are repeated at a pulse frequency; wherein the pulse frequency is greater than a perceptual frequency of light intensity variations perceivable by a human eye; and
- control a first light source switch (401, 522) of the plurality of light source switches (401, 411, 522, 532) such that the electrical output power is supplied to the first SSL light source (309) within the sequence of isolated time slots (371, 603).

5. The driver circuit (300) of claim 4, wherein
- the controller (306) is configured to assign a plurality of sequences of isolated time slots (371, 603) to the plurality of SSL light sources (309, 419), respectively; and
- the sequences of time slots (371, 603) are non-overlapping.

6. The driver circuit (300) of any of claims 4 to 5, further configured to provide an overdrive drive current to a first SSL light source (309) within the sequence of isolated time slots (371, 603), thereby operating the first SSL light source (309) in an overdrive mode within the sequence of isolated time slots (371, 603); wherein the overdrive drive current exceeds a maximum drive current which the first SSL light source (309) is configured to withstand during a continuous operation.

7. The driver circuit (300) of any of claims 4 to 6, wherein
- the controller (306) is configured to modify an on-time interval (381) within a first time slot (371) of the sequence of isolated time slots (371, 603) assigned to the first SSL light source (309); and
- within the first time slot (371), the first SSL light source switch (401) is closed only during the on-time interval (381).

8. The driver circuit (300) of any previous claim, wherein
- one or more of the plurality of light source switches (522, 532) are configured to couple the respective one or more SSL light sources of the plurality of SSL light sources (309, 419) to ground for enabling the supply of the electrical output power to the respective one or more SSL light sources; or
- one or more of the plurality of light source switches (522, 532) are configured to couple the respective one or more SSL light sources of the plurality of SSL light sources (309, 419) to the output of the power converter (405) for enabling the supply of the electrical output power to the respective one or more SSL light sources.

9. The driver circuit (300) of any previous claim, wherein
- the driver circuit (300) further comprises a bypass switch (521) arranged in parallel to a first SSL light source (309) of the plurality of SSL light sources (309, 419); and
- the controller is configured to close the bypass switch (521) to bypass the first SSL light source (309) at a time instant, when a first light source switch (401) of the plurality of SSL light source switches (401, 411, 522, 532) corresponding to the first SSL light source (309) is open.

10. The driver circuit (300) of any previous claim, wherein
- the driver circuit (300) further comprises a supply voltage capacitor (310) configured to supply a supply voltage to the controller (306);
- the driver circuit (300) further comprises a supply voltage switch (501) configured to enable and/or to disable a supply of the electrical output power to the supply voltage capacitor (310); and
- the controller (306) is configured to control the supply voltage switch (501) to enable the supply of the electrical output power to the supply voltage capacitor (310) in a mutually exclusive manner with respect to the plurality of SSL light sources (309, 419).

11. The driver circuit (300) of any previous claim, wherein the driver circuit (300) further comprises an output capacitor (309) at the output of the power converter (305, 405) arranged in parallel to each of the plurality of light sources (401, 411, 522, 532), when the respective light source switch from the plurality of light source switches (401, 411, 522, 532) is closed.

12. The driver circuit (300) of any previous claim, an SSL light source (309) of the plurality of SSL light sources (309, 419) comprises an array of light emitting diodes.

13. The driver circuit (300) of any previous claim, wherein
- the driver circuit (300) further comprises a plurality of drive current measurement means (402, 412) configured to provide a respective plurality of indications (406, 412) of a drive current through the respective plurality of SSL light sources (309, 419); and
- the controller (306) is configured to determine an on-time interval (381) and/or a gate voltage of the plurality of light source switches (401, 411, 522, 532) based on the plurality of indications (406, 412) of the drive current.

14. A light bulb assembly (1) comprising
- an electrical connection module (4) configured to electrically connect to a mains power supply, thereby providing an input voltage waveform;
- a driver circuit (300) of any of claims 1 to 13, configured to convert the input voltage waveform into drive signals for a plurality of solid state lighting, referred to as SSL, light sources (309, 419); and
- the plurality of SSL light sources (309, 419) configured to provide light in accordance to the respective drive signals.

15. A method (700) for providing electrical power to a plurality of solid state lighting, referred to as SSL, light sources (309, 419), the method (700) comprising
- providing (701) electrical output power at an output of a power converter (305, 405); and
- enabling (702) a supply of the electrical output power to the plurality of SSL light sources (309, 419), respectively, in a mutually exclusive manner.
